# EUROPÄISCHE PATENTSCHRIFT

(11) **EP 2 381 280 B1**
(45) Veröffentlichungstag und Bekanntmachung des Hinweises auf die Patenterteilung: **07.05.2014**
(21) Anmeldenummer: 11161249.5
(22) Anmeldetag: 06.04.2011
(51) Int. Cl.: G02B 5/20, G02B 5/22

(54) **IR-Neutralfilter mit einem für Infrarotstrahlung transparenten Substrat**
IR neutral filter with a substrate transparent for infra-red radiation
Filtre neutre IR doté d'un substrat transparent pour le rayonnement infrarouge

(30) Priorität: 22.04.2010 DE 102010018052
(43) Veröffentlichungstag der Anmeldung: 26.10.2011
(73) Patentinhaber: JENOPTIK Optical Systems GmbH, 07745 Jena (DE)
(72) Erfinder: Fasold, Dieter, 07745, Jena (DE); Gittler, Elvira, 07745, Jena (DE); Serwazi, Dr. Marcus, 37130, Gleichen (DE)
(74) Vertreter: Schaller, Renate

(56) Entgegenhaltungen:
- WO-A2-2004/070072
- RU-C2- 2 200 337
- US-A- 3 679 291
- US-A1- 2005 202 256
- FRENKEL A ET AL: "BROADBAND HIGH-OPTICAL-DENSITY FILTERS IN THE INFRARED", OPTICS LETTERS, OSA, OPTICAL SOCIETY OF AMERICA, WASHINGTON, DC, US, Bd. 19, Nr. 18, 15. September 1994 (1994-09-15), Seiten 1495-1497, XP000445472, ISSN: 0146-9592

## Beschreibung

Die Erfindung betrifft ein IR-Neutralfilter für den infraroten Spektralbereich zur Verwendung in abbildenden optischen IR-Systemen, wie er gattungsgemäß in der RU 2 200 337 C2 offenbart ist.

Bei der Verwendung von im infraroten Spektralbereich abbildenden optischen IRSystemen sind regelmäßig technische Maßnahmen erforderlich, um die als breitbandiges Streulicht (Rauschen, "noise") auftretende IR-Strahlung zu reduzieren. Gleichzeitig soll ein zu detektierendes Signal in einer für die Erfassung ausreichenden Stärke und Qualität erhalten bleiben. Streulicht kann von jedem Körper herrühren, dessen Temperatur oberhalb des absoluten Nullpunktes liegt. In abbildenden optischen IR-Systemen können, neben Streulicht aus der Umgebung, insbesondere Streulichtbeiträge von Fassungen und Randhalterungen der Komponenten der IR-Systeme eine kontrastreiche Abbildung erschweren.

Durch Maßnahmen zur Verschiebung des Verhältnisses von Signalstärken und Rauschen ("signal-noise-ratio", S/N-Verhältnis) ist es möglich, thermografische Abbildungen zu erhalten, deren Auflösung für eine nachfolgende Anwendung, wie z. B. für die Bauthermografie, in stoffwechselphysiologischen Studien oder in IR-Sichtgeräten, ausreichend ist.

Eine Möglichkeit besteht darin, die abbildenden optischen IR-Systeme mit geeigneten Filtern zu kombinieren, durch die auftretendes Streulicht, zumindest über einen gegebenen Spektralbereich, in dem die Detektion erfolgen soll, reduziert und dadurch das zu detektierende Signal besser erfassbar wird. Zugleich ist es nötig, die Reflektivität des Filters zumindest über einen gegebenen Spektralbereich abzusenken, um nicht wesentliche Anteile des zu detektierenden Signals von dem abbildenden optischen IR-System ungenutzt wieder zu reflektieren. Es ist ferner für die Signalerfassung günstig, wenn sich die Transmissivität, also das Verhältnis von auftreffender Strahlung zur tatsächlich durch das Filter durchtretender Strahlung, möglichst nur geringfügig über den gegebenen Spektralbereich ändert.

Eine Ausführung einer Beschichtung mit einer hohen Transmissivität für sichtbares Licht und einer hohen Reflektivität für IR-Strahlung ist aus der US 2005/0202256 A1 bekannt. Dabei sind beiderseits einer Metallschicht Schichten von Metalloxiden mit Brechzahlen von etwa 2,0 angeordnet. Durch die Metallschicht wird eine Transmissivität von IR-Strahlung minimiert. Dadurch kann beispielsweise eine von IR-Strahlung verursachte unerwünschte Erwärmung von Innenräumen von Gebäuden oder Fahrzeugen reduziert werden.

In der RU 2 200 337 C2 wird ein nicht-reflektierendes, neutrales optisches Filter offenbart, bei dem auf einem im Spektralbereich von 0,4 bis 0,7 µm transparenten Substrat eine teildurchlässige Schicht aus Titan mit einer Schichtdicke zwischen 0,028 und 0,03 µm und darüber eine Antireflexionsschicht aus Titanoxid mit einer Schichtdicke zwischen 0,04 und 0,045 µm folgt. Der Dämpfungsfaktor für das vorgeschlagene Filter liegt zwischen 0,17 und 0,2. Durch den aufgezeigten Aufbau des Filters wird dessen Reflektivität auf Werte zwischen 1,76 und 5% gesenkt und zugleich die Anzahl der benötigten Schichten gering gehalten.

Nachteilig ist jedoch die Reflektivität von bis zu 5%, die für hohe Anforderungen an die Detektion von Signalen zu hoch ist.

Der Erfindung liegt die Aufgabe zugrunde, eine Möglichkeit zur breitbandigen Filterung von IR-Strahlen bei gleichzeitig hoher und weitgehend konstanter Transmissivität über einen gegebenen Spektralbereich aufzuzeigen.

Die Aufgabe wird durch ein IR-Neutralfilter gemäß Anspruch 1 gelöst.

Kern der Erfindung ist ein IR-Neutralfilter, dessen Schichten hinsichtlich ihrer Schichtdicke, Brechzahlen, Absorption und Anordnung in einer Folge von Schichten so aufeinander abgestimmt sind, dass eine geringe Reflektivität und eine gleichmäßige Transmissivität des IR-Neutralfilters über einen gegebenen Spektralbereich erreicht wird. Erfindungswesentlich sind dabei das Vorhandensein einer metallischen, absorbierenden Schicht zwischen nicht-absorbierenden Schichten mit von einander verschiedenen Brechzahlen.

Das Substrat kann jede für IR-Strahlung transparente Verbindung oder chemisches Element sein. In vorteilhaften Ausführungen sind als Substrat Germanium oder Silizium gewählt. Die über dem Substrat aufgestapelten Schichten liegen spaltfrei an dem Substrat an oder sind mit diesem stoffschlüssig verbunden.

Über dem Substrat sind mindestens fünf Schichten aufgestapelt, deren mittlere Schicht die absorbierende Schicht ist. Die Brechzahlen unmittelbar aufeinander folgender nicht-absorbierender Schichten unterscheiden sich voneinander um einen Betrag von mindestens 0,3, vorzugsweise jedoch von mindestens 0,4. Die am weitesten von dem Substrat entfernt angeordnete Schicht der Folge von Schichten besteht aus einem niedrigbrechenden Material.

Als Material für die absorbierende Schicht ist vorzugsweise Titan (Ti) gewählt. In weiteren Ausführungen können auch Al, Cr, Au, Ag und Ni sowie deren Legierungen und Verbünde als absorbierende Schicht vorhanden sein.

Niedrigbrechende Materialien im Sinne der Erfindung sind Materialien, deren Brechzahlen in einem Bereich von 1,3 bis kleiner 1,6 liegen. Hochbrechende Materialien weisen dagegen Brechzahlen von 1,6 bis 4,2 auf.

Die niedrigbrechenden Materialien sind dabei vorzugsweise aus einer die Verbindungen YbF₃, MgF₂, BaF₂, LaF₃, YF₃, SmF₂, AlF₃, SiO₂, PbF₂, HoF₂, NaAlF₆, CaF₂, MgO, LiF, NaCl, KBr, KCl und SrF₂ umfassenden Gruppe ausgewählt.

Hochbrechende Materialien werden vorzugsweise aus einer die Verbindungen ZnS, SiO, ZnSe, Al₂O₃, PbTe, ZrO₂, Ta₂O₅, TiO₅ und die Elemente Si und Ge umfassenden Gruppe ausgewählt.

Die Folge der Schichten, die einzelnen Schichtdicken, die Materialien für die nicht-absorbierenden Schichten sowie für die absorbierende Schicht sind so gewählt, dass das IR-Neutralfilter mindestens über Teilbereiche eines gegebenen Spektralbereiches eine einstellbare Transmissivität zwischen 20% und 60% bei einer Schwankungsbreite der Transmissivität von nicht mehr als ± 3% aufweist. Die Einstellung der Transmissivität erfolgt dabei durch die Abstimmung der oben genannten Komponenten aufeinander und auf die zu erwartenden Betriebsbedingungen des IR-Neutralfilters wie z. B. erwartete Strahlungsintensitäten, Temperaturdifferenzen und Leistungsparameter eines mit dem IR-Neutralfilter versehenen optischen IR-Systems.

Die Schichtdicken der einzelnen Schichten können von 0 nm bis 2500 nm variieren.

Der gegebene Spektralbereich liegt innerhalb des Spektralbereichs der IR-Strahlung. In einer bevorzugten Ausführung der Erfindung umfasst der gegebene Spektralbereich die Wellenlängen von 2 µm bis 15 µm.

Zusätzlich zu den oberhalb der absorbierenden Schicht vorhandenen Schichten sind zwischen absorbierender Schicht und Substrat mindestens zwei nicht-absorbierende Schichten aus Materialien mit unterschiedlichen Brechzahlen angeordnet. Diese Anordnung hat sich als erforderlich erwiesen, um sowohl eine Reduzierung der Reflexivität (Entspiegelungswirkung) als auch eine nahezu konstante Transmissivität über mindestens einen Teilbereich des gegebenen Spektralbereichs (Neutralfilterwirkung) zu erreichen. Die vorteilhaften Wirkungen des erfindungsgemäßen IR-Neutralfilters ergeben sich sowohl aus additiven, als auch aus interagierenden Effekten gebrochener, reflektierter, gebeugter und interferierender Strahlen über alle Schichten. Das Dispersionsverhalten der absorbierenden Schicht wird somit auch durch eine geeignete Wahl der Schichtdicken der Schichten mit ausgeglichen.

Das hochkomplexe Zusammenwirken der in den einzelnen Schichten und an deren Grenzflächen beeinflussten Strahlen und Strahlenverläufe erfordert regelmäßig modellhafte Vorhersagen der erzielbaren optischen Wirkungen. Dies kann mittels geeigneter Simulationssoftware geschehen. Anhand modellhafter Vorhersagen können die optischen Eigenschaften und die erzielbaren Wirkungen definierbarer Folgen von Schichten, Schichtdicken sowie Brechzahlen und Absorptionskoeffizienten der Materialien in gegebenen Spektralbereichen simuliert, bewertet und auf erwartete Betriebsbedingungen und Anforderungen des IR-Neutralfilters abgestimmt werden.

Das erfindungsgemäße IR-Neutralfilter kann in vorteilhaften Ausführungen zusammen mit komplexen und schmalbandigen Filtersystemen angeordnet und verwendet werden. Das IR-Neutralfilter kann in bekannter Weise in abbildende optische IR-Systeme integriert und insbesondere auf optische Baugruppen, wie z. B. Objektive, mittels bekannter Verfahren aufgebracht werden.

Das erfindungsgemäße IR-Neutralfilter soll nachfolgend anhand von Abbildungen und Ausführungsbeispielen näher erläutert werden. Dabei zeigen:
- Fig.: 1 ein erstes Ausführungsbeispiel eines IR-Neutralfilters mit a) einer schematischen Darstellung eines Substrats und einer Folge von Schichten und b) einer graphischen Darstellung der Verläufe der Reflexivität und Transmissivität des IR-Neutralfilters,
- Fig. 2: ein zweites Ausführungsbeispiel eines IR-Neutralfilters mit a) einer schematischen Darstellung eines Substrats und einer Folge von Schichten und b) einer graphischen Darstellung der Verläufe der Reflexivität und Transmissivität des IR-Neutralfilters,
- Fig. 3: ein drittes Ausführungsbeispiel eines IR-Neutralfilters mit a) einer schematischen Darstellung eines Substrats und einer Folge von Schichten und b) einer graphischen Darstellung der Verläufe der Reflexivität und Transmissivität des IR-Neutralfilters.

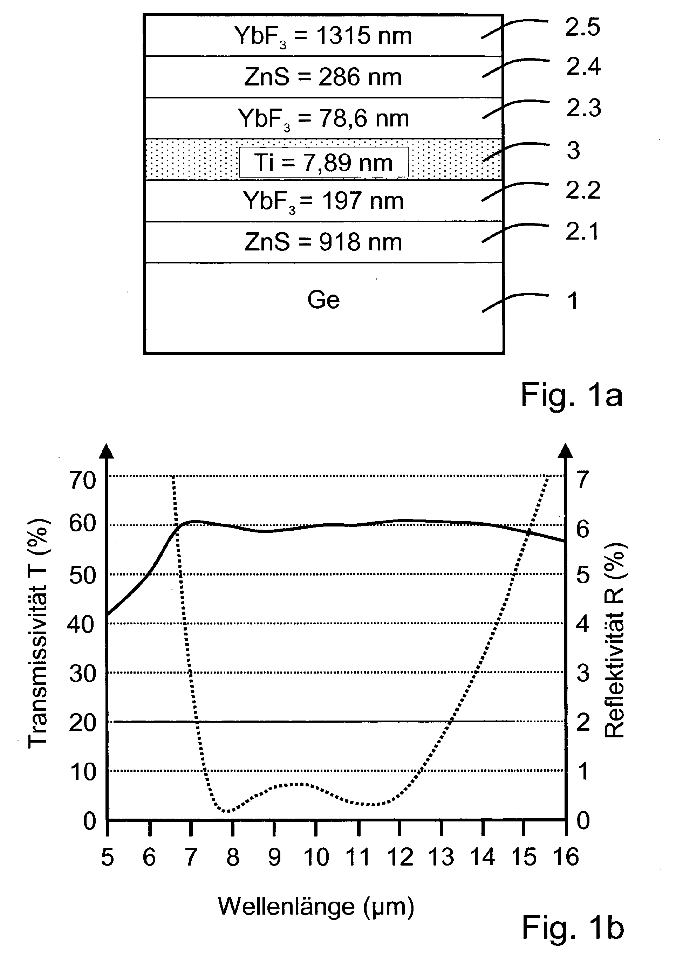

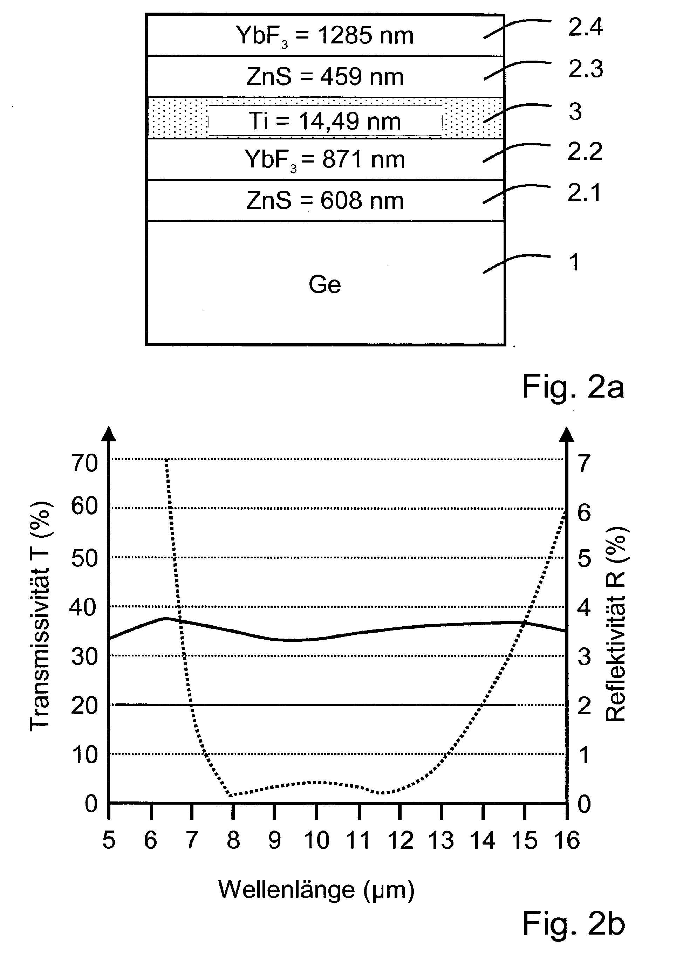

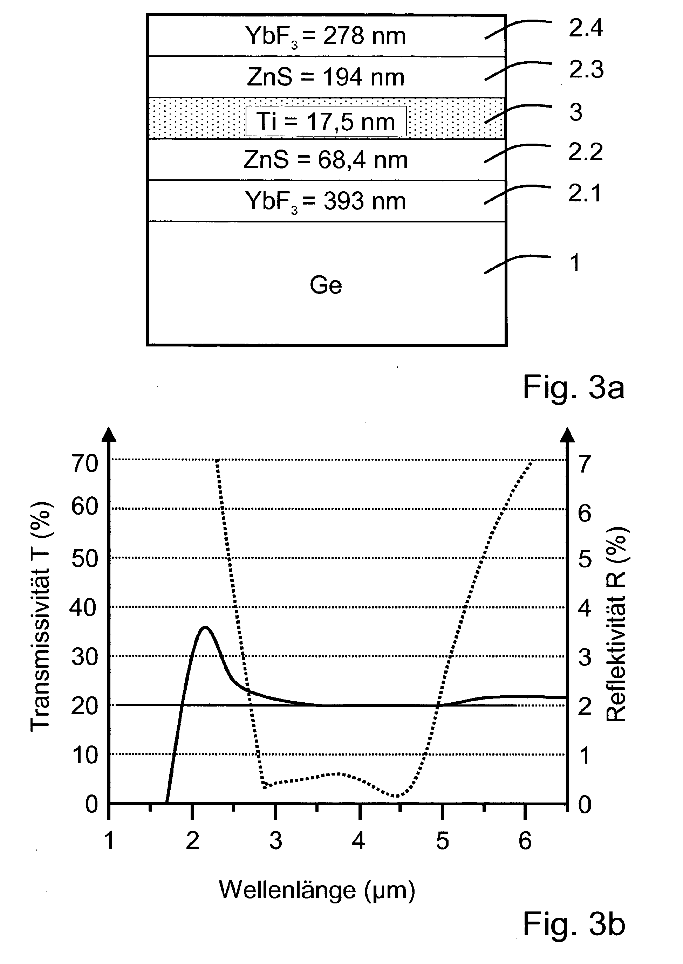

Die nachfolgend in den Ausführungsbeispielen gezeigten Graphen stellen jeweils schematisch die Verläufe der Transmissivität T (dicke Volllinie, linke Ordinate) und der Reflektivität R (Punktlinie, rechte Ordinate) der in den jeweiligen Ausführungsbeispielen beschriebenen Folge der Schichten bei einer senkrechten Beleuchtung mit weißem Licht in Luft in einem Spektralbereich zwischen 5 und 16 µm (Fig. 1b und 2b) bzw. zwischen 1 und 6 µm (Fig. 3b) Wellenlänge dar.

### 1. Ausführungsbeispiel

Gemäß Fig. 1a besteht eine erste Folge von Schichten aus einem als Substrat 1 verwendeten Germanium-Substrat und fünf darüber aufgestapelter und IR-Strahlung nicht-absorbierende Schichten 2.1 bis 2.5. Zwischen der zweiten und dritten nicht-absorbierenden Schicht 2.2, 2.3 ist eine IR-Strahlung absorbierende Schicht 3 angeordnet. Die erste und vierte nicht-absorbierende Schicht 2.1, 2.4 ist jeweils aus dem hochbrechenden Material Zinksulfid (ZnS; 918 nm bzw. 286 nm Schichtdicke); die zweite, dritte und fünfte nicht-absorbierende Schicht 2.2, 2.3, 2.5 ist jeweils aus dem niedrigbrechenden Material Ytterbium(III)-flourid (YbF₃; 197 nm, 78,6 nm bzw. 1315 nm Schichtdicke) gebildet. Die absorbierende Schicht 3 besteht aus dem Metall Titan (Ti; 7,89 nm Schichtdicke). Die Schichtdicken der einzelnen Schichten können in weiteren Ausführungen von 0 nm bis 2500 nm variieren.

Ein IR-Neutralfilter gemäß dem ersten Ausführungsbeispiel ist für die Anwendung in einem Bereich von 7 µm bis 14 µm vorgesehen und weist eine mittlere Transmissivität (dicke Volllinie) von 60% auf. Wie in Fig. 1b deutlich zu sehen ist, schwankt die Transmissivität T innerhalb des für eine Anwendung geeigneten Bereiches um weniger als ± 3%. Die Reflektivität R (Punktlinie) fällt bei etwa 7 µm steil ab, schwingt sich zwischen etwa 7,5 µm und 12 µm auf Werte unter 1 % ein und steigt dann wieder an.

### 2. Ausführungsbeispiel

Gemäß Fig. 2a besteht eine zweite Folge von Schichten aus einem als Substrat 1 verwendeten Germanium-Substrat und den darüber aufgestapelten ersten bis vierten IR-Strahlung nicht-absorbierenden Schichten 2.1 bis 2.4 und einer zwischen der zweiten und dritten nicht-absorbierenden Schicht 2.2, 2.3 angeordneten IR-Strahlung absorbierenden Schicht 3. Die erste und dritte nicht-absorbierende Schicht 2.1, 2.3 ist jeweils aus dem hochbrechenden Material Zinksulfid (ZnS; 608 nm bzw. 459 nm Schichtdicke); die zweite und vierte nicht-absorbierende Schicht 2.2, 2.4 ist jeweils aus dem niedrigbrechenden Material Ytterbium(III)-flourid (YbF₃; 871 nm bzw. 1285 nm Schichtdicke) gebildet. Die absorbierende Schicht 3 besteht aus dem Metall Titan (Ti; 14,49 nm Schichtdicke). Die Schichtdicken der einzelnen Schichten können in weiteren Ausführungen von 0 nm bis 2500 nm variieren.

Ein IR-Neutralfilter gemäß dem zweiten Ausführungsbeispiel ist für die Anwendung in einem Bereich von 7 µm bis 14 µm vorgesehen und weist eine mittlere Transmissivität (dicke Volllinie) von 35% auf. Wie in Fig. 2b deutlich zu erkennen ist, schwankt die Transmissivität T innerhalb des für eine Anwendung geeigneten Bereiches um weniger als ±3%. Die Reflektivität R fällt bei etwa 7 µm steil ab, schwingt sich zwischen etwa 7,5 µm und 13 µm auf Werte unter 1% ein und steigt dann wieder an.

### 3. Ausführungsbeispiel

Gemäß Fig. 3a besteht eine dritte Folge von Schichten aus einem als Substrat 1 verwendeten Germanium-Substrat und den darüber aufgestapelten ersten bis vierten IR-Strahlung nicht-absorbierenden Schichten 2.1 bis 2.4 und einer zwischen der zweiten und dritten nicht-absorbierenden Schicht 2.2, 2.3 angeordneten IR-Strahlung absorbierenden Schicht 3. Die zweite und dritte nicht-absorbierende Schicht 2.2, 2.3 ist jeweils aus dem hochbrechenden Material Zinksulfid (ZnS; 68,4 nm bzw. 194 nm Schichtdicke), die erste und vierte nicht-absorbierende Schicht 2.1, 2.4 jeweils aus dem niedrigbrechenden Material Ytterbium(III)-flourid (YbF₃; 393 nm bzw. 278 nm Schichtdicke) gebildet. Die absorbierende Schicht 3 besteht aus dem Metall Titan (Ti; 17,5 nm Schichtdicke). Die Schichtdicken der einzelnen Schichten können in weiteren Ausführungen von 0 nm bis 2500 nm variieren.

Ein IR-Neutralfilter gemäß dem dritten Ausführungsbeispiel ist für die Anwendung in einem Bereich von 3 µm bis 4,5 µm vorgesehen und weist eine mittlere Transmissivität (dicke Volllinie) von 20% auf. Wie in Fig. 3b deutlich zu erkennen ist, schwankt die Transmissivität T innerhalb des für eine Anwendung geeigneten Bereiches um weniger als ±3%. Die Reflektivität R beträgt im gesamten betrachteten Bereich weniger als 1%.

Das IR-Neutralfilter kann in komplexen abbildenden optischen Systemen, insbesondere in IR-Systemen, zur Unterstützung der Streulichtreduzierung verwendet werden. Anwendungsbereiche ergeben sich für alle Bereiche der Thermographie und kann sowohl in passiven IR-Systemen, bei denen die Restwärme von Körpern erfasst wird, als auch in aktiven IR-Systemen, bei denen die Körper zusätzlich bestrahlt werden, verwendet werden.

Das erfindungsgemäße IR-Neutralfilter zeichnet sich in einem jeweils gegebenen Spektralbereich insbesondere durch konstante und gut auf verschiedenste Betriebsbedingungen einstellbare Transmissivität T aus.

### Bezugszeichen

- 1: Substrat
- 2.1: erste nicht-absorbierende Schicht
- 2.2: zweite nicht-absorbierende Schicht
- 2.3: dritte nicht-absorbierende Schicht
- 2.4: vierte nicht-absorbierende Schicht
- 2.5: fünfte nicht-absorbierende Schicht
- 3: absorbierende Schicht

## Patentansprüche

1. IR-Neutralfilter mit einem für Infrarotstrahlung transparenten Substrat (1) und mit einer Folge von über dem Substrat (1) aufgestapelten Schichten unterschiedlicher Brechzahlen und Absorptionskoeffizienten, **dadurch gekennzeichnet,**
**dass** eine der Schichten eine metallische und für Infrarotstrahlung absorbierende Schicht (3) ist,
**dass** über jeder Seite der absorbierenden Schicht (3) mindestens zwei für Infrarotstrahlung nicht-absorbierende Schichten (2.1 bis 2.4) aufgestapelt sind, wobei die nicht-absorbierenden Schichten (2.1 bis 2.4) alternierend aus niedrigbrechenden Materialien und hochbrechenden Materialien bestehen und dass sich die Brechzahlen unmittelbar aneinander angrenzender nichtabsorbierender Schichten (2.1 und 2.2; 2.3 und 2.4) um einen Betrag von mindestens 0,3 unterscheiden, wobei die Brechzahlen, die einzelnen Schichtdicken der Schichten, die Materialien für die nicht absorbierenden Schichten (2.1 und 2.2; 2.3 und 2.4) sowie für die absorbierende Schicht (3) so gewählt sind, dass das IR-Neutralfilter mindestens über Teilbereiche eines gegebenen Spektralbereiches, der innerhalb des Spektralbereichs der IR-Strahlung liegt, eine Transmissivität zwischen 20% und 60% bei einer Schwankungsbreite der Transmissivität von nicht mehr als ± 3% aufweist.

2. IR-Neutralfilter nach Anspruch 1, **dadurch gekennzeichnet,**
**dass** die Brechzahlen der niedrigbrechenden Materialien aus einem Bereich von 1,3 bis kleiner 1,6 ausgewählt sind.

3. IR-Neutralfilter nach Anspruch 1, **dadurch gekennzeichnet,**
**dass** die Brechzahlen der hochbrechenden Materialien aus einem Bereich von 1,6 bis 4,2 ausgewählt sind.

4. IR-Neutralfilter nach Anspruch 2, **dadurch gekennzeichnet,**
**dass** das niedrigbrechende Material aus einer die Verbindungen YbF₃, MgF₂, BaF₂, LaF₃, YF₃, SmF₂, AlF₃, SiO₂, PbF₂, HoF₂, NaAlF₆, CaF₂, MgO, LiF, NaCl, KBr, KCl und SrF₂ umfassenden Gruppe ausgewählt ist.

5. IR-Neutralfilter nach Anspruch 3, **dadurch gekennzeichnet,**
**dass** das hochbrechende Material aus einer die Verbindungen ZnS, SiO, ZnSe, Al₂O₃, PbTe, ZrO₂, Ta₂O₅, TiO₅ und die Elemente Si und Ge umfassenden Gruppe ausgewählt ist.

6. IR-Neutralfilter nach Anspruch 1, **dadurch gekennzeichnet,**
**dass** die absorbierende Schicht (3) aus einem Material besteht, das aus einer die Metalle Ti, Al, Cr, Au, Ag und Ni umfassenden Gruppe ausgewählt ist.

7. IR-Neutralfilter nach Anspruch 8, **dadurch gekennzeichnet,**
**dass** der gegebene Spektralbereich Wellenlängen von 2 µm bis 15 µm umfasst.

8. Verwendung eines IR-Neutralfilters nach einem der vorhergehenden Ansprüche zur Unterstützung der Reduzierung von Streulicht bei komplexen abbildenden optischen Systemen.

## Claims

1. IR neutral filter with a substrate (1) transparent for infra-red radiation and with a series of layers having different refractive indices and absorption coefficients stacked on the substrate (1), **characterized in that**
one of the layers is a metallic and infra-red radiation absorbing layer (3),
at least two infra-red radiation non-absorbing layers (2.1 to 2.4) are stacked on each side of the absorbing layer (3), wherein the non-absorbing layers (2.1 to 2.4) comprise alternating low-refractive materials and high-refractive materials, and that the refractive indices of immediately adjacent non-absorbing layers (2.1 and 2.2; 2.3 and 2.4) differ by a value of at least 0.3, wherein the refractive indices, the single thickness of the layers, the materials for the non-absorbing layers (2.1 and 2.2; 2.3 and 2.4) and for the absorbing layer (3) are selected so that the IR neutral filter has a transmissivity between 20% and 60% with a variation range of the transmissivity of no more than +- 3% at least over partial regions of a given spectral range which lies within the spectral range of the IR radiation.

2. IR neutral filter according to claim 1, **characterized in that**
the refractive indices of the low-refractive materials are selected from a range of 1,3 up to less than 1,6.

3. IR neutral filter according to claim 1, **characterized in that**
the refractive indices of the high-refractive materials are selected from a range of 1,6 to 4,2.

4. IR neutral filter according to claim 2, **characterized in that**
the low-refractive material is selected from a group comprising the compounds YbF₃, MgF₂, BaF₂, LaF₃, YF₃, SmF₂, AlF₃, SiO₂, PbF₂, HoF₂, NaAlF₆, CaF₂, MgO, LiF, NaCl, KBr, KCl and SrF₂.

5. IR neutral filter according to claim 3, **characterized in that**
the high-refractive material is selected from a group comprising the compounds ZnS, SiO, ZnSe, Al₂O₃, PbTe, ZrO₂, Ta₂O₅, TiO₅ and the elements Si and Ge.

6. IR neutral filter according to claim 1, **characterized in that**
the absorbing layer (3) consists of a material which is selected from a group comprising the metals Ti, Al, Cr, Au, Ag and Ni.

7. IR neutral filter according to claim 8, **characterized in that**
the given spectral range comprises wavelengths of 2 µm to 15 µm.

8. Use of an IR neutral filter according to one of the preceding claims for supporting the reduction of scattered light in complex imaging optical systems.

## Revendications

1. Filtre neutre IR doté d'un substrat (1) transparent pour le rayonnement infrarouge et d'une série de couches ayant des indices de réfraction et des coefficients d'absorption différents empilées sur le substrat (1), **caractérisé en ce que** une des couches est une couche (3) métallique et absorbante de la radiation infrarouge,
au moins deux couches non-absorbantes (2.1 to 2.4) de la radiation infrarouge sont empilées sur chaque côté de la couche absorbante (3), les couches non-absorbantes (2.1 à 2.4) comprenant en alternance des matériaux à faible réfraction et des matériaux à haute réfraction, et que les indices de réfraction de couches non-absorbantes (2.1 et 2.2; 2.3 et 2.4) immédiatement adjacentes diffèrent d'un valeur d'au moins 0.3, les indices de réfraction, l'épaisseur individuelle des couches, les matériaux pour les couches non-absorbantes (2.1 et 2.2; 2.3 et 2.4) et pour la couche absorbante (3) étant choisis pour que le filtre neutre IR ait une transmissivité entre 20% et 60% à une variation de transmissivité qui n'excède pas +- 3% au moins sur des zones partielles d'un domaine spectral donné qui se trouve dans le domaine spectral de la radiation IR.

2. Filtre neutre IR selon la revendication 1, **caractérisé en ce que** les indices de réfraction des matériaux à faible réfraction sont choisies d'un domaine de 1,3 à moins de 1,6.

3. Filtre neutre IR selon la revendication 1, **caractérisé en ce que** les indices de réfraction des matériaux à haute réfraction sont choisies d'un domaine de 1,6 à 4,2.

4. Filtre neutre IR selon la revendication 2, **caractérisé en ce que** le matériau à faible réfraction est choisi d'un groupe comprenant les composés YbF₃, MgF₂, BaF₂, LaF₃, YF₃, SmF₂, AlF₃, SiO₂, PbF₂, HoF₂, NaAlF₆, CaF₂, MgO, LiF, NaCl, KBr, KCl et SrF₂.

5. Filtre neutre IR selon la revendication 3, **caractérisé en ce que** le matériau à haute réfraction est choisi d'un groupe comprenant les composés ZnS, SiO, ZnSe, Al₂O₃, PbTe, ZrO₂, Ta₂O₅, TiO₅ et les éléments Si et Ge.

6. Filtre neutre IR selon la revendication 1, **caractérisé en ce que** la couche absorbante (3) est composée d'un matériau choisi d'un groupe comprenant les métaux Ti, Al, Cr, Au, Ag et Ni.

7. Filtre neutre IR selon la revendication 8, **caractérisé en ce que** le domaine spectral donné comprend des longueurs d'onde de 2 µm à 15 µm.

8. Emploi d'un filtre neutre IR selon une des revendications précédentes pour soutenir la réduction de lumière diffusée dans des systèmes optiques d'image complexes.
